# EUROPÄISCHE PATENTANMELDUNG

(11) **EP 4 563 962 A1**
(43) Veröffentlichungstag der Anmeldung: **04.06.2025**
(21) Anmeldenummer: 23213106.0
(22) Anmeldetag: 29.11.2023
(51) Int. Cl.: G01M 11/06

(54) **KAMERAGESTÜTZTE AUSRICHTUNG EINES SCHEINWERFER-EINSTELL-PRÜFGERÄTS**

(71) Anmelder: Hella Gutmann Solutions GmbH, 79241 Ihringen (DE)
(72) Erfinder: Driewer, Adrian, 79241 Ihringgen (DE); Becker, Thomas, 79241 Ihringgen (DE)
(74) Vertreter: Pfenning, Meinig & Partner mbB

(57) **Zusammenfassung**

Die vorliegende Erfindung betrifft ein Verfahren zumindest zur Unterstützung bei der Ausrichtung eines Scheinwerfer-Einstell-Prüfgeräts, SEP, bezüglich eines Fahrzeugs mit Hilfe einer Kamera sowie ein System, aufweisend ein SEP und eine Kamera, das dazu ausgebildet ist, das Verfahren durchzuführen.

## Beschreibung

Die vorliegende Erfindung betrifft ein Verfahren zumindest zur Unterstützung bei der Ausrichtung eines Scheinwerfer-Einstell-Prüfgeräts, SEP, bezüglich eines Fahrzeugs mit Hilfe einer Kamera sowie ein System, aufweisend ein SEP und eine Kamera, das dazu ausgebildet ist, das Verfahren durchzuführen.

Scheinwerfer eines Fahrzeugs müssen in vielen Fällen auf eine bestimmte Weise ausgerichtet werden und sonstige bestimmte Bedingungen, wie gesetzliche Vorgaben, erfüllen. Eine Lichtverteilung, die der Scheinwerfer erzeugt, muss beispielsweise in einem bestimmten Höhenbereich liegen, außerdem sollte die Lichtverteilung in manchen Fällen eine bestimmte Form aufweisen. Auch sollte das vom Scheinwerfer abgestrahlte Licht einen bestimmten Winkel zur Fahrbahn aufweisen. Zur Vermessung der vom Scheinwerfer erzeugten Lichtverteilung werden typischerweise Scheinwerfer-Einstell-Prüfgeräte, SEPs, verwendet, die vor dem Scheinwerfer positioniert werden und Mittel aufweisen, die dazu eingerichtet sind, das vom Scheinwerfer emittierte Licht zu erfassen und die erzeugte Lichtverteilung gegebenenfalls zu vermessen. Der Scheinwerfer kann anschließend auf Basis der Ergebnisse der Vermessung eingestellt werden.

Für eine zuverlässige und korrekte Vermessung der vom Scheinwerfer generierten Lichtverteilung mit einem SEP ist es nötig, dass das SEP bezüglich des Fahrzeugs ausgerichtet wird. Im Stand der Technik sind beispielsweise Vorrichtung mit Linienlasern bekannt, die zur Ausrichtung von SEPs verwendet werden. Mit Hilfe des Linienlasers kann das SEP wie folgt ausgerichtet werden:
Zunächst wird ein Linienlaser über dem SEP positioniert und drehfest mit diesem verbunden. Der Linienlaser ist dabei derart angeordnet, dass eine Laserlinie, die der Linienlaser erzeugt, senkrecht zu einer optischen Achse des SEP ausgerichtet ist. Außerdem werden an der Fahrzeugkarosserie zwei Stellen oder Punkte definiert, die symmetrisch zur Fahrzeuglängsachse angeordnet sind. Anschließend wird das SEP in einem bestimmten Abstand vor den Schweinwerfern positioniert. Das SEP wird dann gemeinsam mit dem Linienlaser so gedreht und ausgerichtet, dass die Laserlinie die beiden zuvor definierten Stellen der Karosserie des Fahrzeugs berührt oder schneidet. Auf diesem Weg kann die optische Achse des SEP parallel zur Fahrzuglängsachse ausgerichtet werden.

Die Ausrichtung des Optikgehäuses mithilfe eines Linienlasers, wie es im Stand der Technik bekannt ist, hat mehrere Nachteile. Insbesondere bei großen Fahrzeugen und einem hohen Motorraum scheint der Laserstrahl in einem flachen Winkel auf das Fahrzeug. Der flache Winkel und die Aufweitung des Laserstrahls führen dazu, dass die genaue Ausrichtung mit dem menschlichen Auge in manchen Fällen nur schwer zu erfassen ist. Bei Fahrzeugen mit dunklem bzw. stark reflektierendem Lack oder bei heller Umgebungsbeleuchtung ist die Laserlinie in den meisten Fällen nur schwer sichtbar. Die Intensität des Lasers ist jedoch durch die Laserschutzklasse limitiert. Höhere Laserschutzklassen sind für die Anwendung in einer Werkstatt nicht praxistauglich.

Ein weiteres Problem kann auftreten, wenn das SEP nicht in Waage vor dem Fahrzeug platziert werden kann. In diesem Fall wird die Laserlinie schräg auf das Fahrzeug projiziert. Hierbei ist der Wankwinkel ausschlaggebend. Wenn das Gerät dennoch so ausgerichtet wird, dass die Laserlinie zwei symmetrische Punkte berührt, führt dies zu einer Fehlausrichtung.

Aufgabe der vorliegenden Erfindung ist es daher die Ausrichtung eines SEP bezüglich eines Fahrzeugs zu verbessern und/oder zu vereinfachen. Dies Aufgabe wird gelöst durch ein Verfahren zumindest zur Unterstützung bei der Ausrichtung eines Scheinwerfer-Einstell-Prüfgeräts, SEP, bezüglich eines Fahrzeugs mit Hilfe einer Kamera gemäß Anspruch 1 sowie durch ein System gemäß dem nebengeordneten unabhängigen Systemanspruch, umfassend ein Scheinwerfer-Einstell-Prüfgerät, SEP, und eine Kamera, das dazu ausgebildet ist, das Verfahren durchzuführen.

Gemäß einem Aspekt wird ein Verfahren zumindest zur Unterstützung bei der Ausrichtung eines SEP bezüglich eines Fahrzeugs mit Hilfe einer Kamera vorgeschlagen. Das Verfahren weist die folgenden Schritte auf:
- Erfassen zumindest eines Bildes zumindest eines Teilbereichs des Fahrzeugs mittels der Kamera,
- Erzeugen von Ausrichtungsdaten zum Unterstützen der Ausrichtung des SEP bezüglich des Fahrzeugs unter Verwendung von Referenzdaten und des zumindest einen erfassten Bildes des Fahrzeugs.

Unter einem SEP kann im Rahmen dieser Offenbarung jedes Mittel verstanden werden, das zur Erfassung und/oder Vermessung einer Lichtverteilung, die von einem Scheinwerfer emittiert wird, geeignet ist. Dies kann beispielsweise durch Vorrichtungen, wie beispielsweise eine Lichterfassungseinheit realisiert sein, die das vom Scheinwerfer emittierte Licht mit einer Eingangsoptik, beispielsweise zumindest einer Linse, auf einen Schirm oder einen lichtempfindlichen Sensor, wie einen Kamerasensor, projizieren. Der Schirm oder der lichtempfindliche Sensor kann beispielsweise in der Brennebene der Eingangsoptik angeordnet sein. Das SEP kann typischerweise eine Lichterfassungseinheit mit einer Eingangsoptik wie eine Eingangslinse aufweisen, auf die das vom Scheinwerfer emittierte Licht auftrifft, beispielsweise als erstes auftrifft. Die Eingangslinse kann beispielsweise als Fresnellinse ausgebildet sein. Vorteilhafterweise kann die Lichterfassungseinheit höhenverstellbar an einer Stativanordnung angeordnet sein. Besonders vorteilhaft ist es, wenn diese Vorrichtung bzw. Geräte Rollen oder Räder aufweisen, und in einer Richtung quer zur optischen Achse, insbesondere senkrecht zur optischen Achse, verschiebbar sind. Manchmal ist ein nivellierbares Schienensystem vorgesehen, auf dem das SEP hin- und hergefahren werden kann.

Unter Ausrichten des SEP gegenüber einem Fahrzeug kann verstanden werden, dass das SEP in eine Stellung gebracht wird, in der zumindest eine bestimmte Achse oder eine bestimmte Ebene des SEP und eine bestimmte Achse oder eine bestimmte Ebene des Fahrzeugs einen Winkel mit einem bestimmten Winkelmaß einschließen oder parallel zueinander angeordnet sind. Eine bestimmte Achse des SEP kann beispielsweise die optische Achse des SEP sein. Die optische Achse des SEP bezieht sich hierbei typischerweise auf die optische Achse des Teils der Vorrichtung, welcher für das Empfangen, Vermessen bzw. Erfassen des Scheinwerferlichts ausgestaltet ist und kann beispielsweise durch die Rotations-Symmetrieachse der Eingangslinse des SEP gebildet sein. Wenn also nachfolgend von der optischen Achse des SEP die Rede ist, so kann damit die optische Achse einer Lichterfassungseinheit des SEPs gemeint sein. Eine bestimmte Ebene des SEP kann beispielsweise eine vertikale Ebene sein, die durch die optische Achse des SEP verläuft. Eine bestimmte Achse des Fahrzeugs kann beispielsweise die geometrische Fahrachse oder eine Längs- oder Querachse des Fahrzeugs sein. Eine bestimmte Ebene des Fahrzeugs kann beispielsweise eine Symmetrieebene des Fahrzeugs sein. Vorteilhafterweise kann die Ausrichtung des SEP auch umfassen, dass das SEP derart in Bezug auf das Fahrzeug positioniert wird, dass der Abstand zwischen SEP und Fahrzeug ein bestimmtes Längenmaß aufweist.

Das Erfassen des Bildes des Fahrzeugs kann das Abbilden eines Teilbereichs des Fahrzeugs mittels einer Optik auf einen Kamerasensor oder einen Schirm aufweisen. Das Erfassen des Bildes des Fahrzeugs kann insbesondere das Erfassen oder das Abbilden zumindest eines Teilbereichs einer Oberseite des Fahrzeugs und/oder eines Motorraumes und/oder der Motorhaube und/oder der Karosserie mittels der Kamera aufweisen. Vorteilhafterweise kann die Kamera einen Bereich erfassen, der in Blickrichtung des SEP vor dem SEP liegt, insbesondere einen Bereich von mindestens 0,5 m und/oder höchstens 2,0 m vor dem SEP liegt. Vorteilhafterweise schließt die optische Achse der Kamera mit der optischen Achse des SEP einen Winkel von mehr als 0° und/oder weniger als oder gleich 90° ein. In manchen Ausführungsformen schließen die optische Achse der Kamera und die optische Achse des SEP einen Winkel von mehr als 30° und/oder weniger als 60° ein. Insbesondere können die optische Achse des SEP und die Projektion der optischen Achse der Kamera auf eine vertikale Ebene, die durch die optische Achse des SEP verläuft, einen Winkel von mehr als 0° und weniger als oder gleich 90° oder einen Winkel von mehr als 30° und weniger als 60° einschließen. In besonders vorteilhaften Ausgestaltungen können die Kamera und das SEP derart angeordnet sein, dass ihre optischen Achsen in einer gemeinsamen Ebene angeordnet sind oder die Projektionen der beiden optischen Achsen auf eine Ebene, vorteilhafterweise eine Bodenebene, zueinander parallel sind. Die Kamera ist oftmals über dem SEP angeordnet. Das SEP selbst ist dazu ausgestaltet, das Licht von dem Scheinwerfer zu empfangen und/oder zu vermessen.

Weiter werden Ausrichtungsdaten erzeugt, die einen Nutzer bei der Ausrichtung eines SEP unterstützen können. Unter Ausrichtungsdaten können im Allgemeinen Angaben oder Werte verstanden werden, die die aktuelle Ausrichtung des SEP gegenüber dem Fahrzeug und/oder eine aktuelle Abweichung der Ausrichtung des SEP gegenüber dem Fahrzeug beschreiben. Darunter können insbesondere Angaben verstanden werden, die eine Größe eines Winkels beschreiben, den eine bestimmte Achse des SEP mit einer bestimmten Achse des Fahrzeugs einschließt und/oder Angaben, die einen Abstands des SEP zum Fahrzeug beschreiben, bzw. die entsprechende Abweichung davon. Die Ausrichtungsdaten müssen nicht auf einen oder mehrere skalare Werte beschränkt sein, sondern können im Rahmen dieser Offenbarung auch abstraktere Formen annehmen. Unter die Ausrichtungsdaten können im Allgemeinen also auch Darstellungsformen wie beispielsweise die Überlagerung von Referenzdaten mit dem erfassten Bild, angesehen werden. Ausrichtungsdaten können insbesondere auch Bilddaten sein, wie beispielsweise ein Bild, das die Überlagerung eines von der Kamera erfassten Bildes mit einem Referenzbild darstellt. Ausrichtungsdaten können außerdem auch Daten sein, die angeben, ob das SEP eine bestimmungsgemäße Ausrichtung gegenüber dem Fahrzeugt aufweist oder nicht. Folglich können Ausrichtungsdaten auch beispielsweise lediglich zwei Werte annehmen, wie beispielsweise "ausgerichtet" oder "nicht ausgerichtet". Auch prozentuale oder relative Angaben sind möglich.

Die Referenzdaten sind beispielsweise dadurch charakterisiert, dass sie Informationen einer vorgegebenen Ausrichtung der Kamera gegenüber dem SEP enthalten. Ein weiterer Schritt des Verfahrens kann daher auch ein Bestimmen der Ausrichtung der Kamera gegenüber dem SEP sein, sofern diese nicht bekannt ist. Im Regelfall aber weisen die Kamera und das SEP eine festvorgegebene und bekannte Ausrichtung zueinander auf. Die Ausrichtung der Kamera gegenüber dem SEP kann beispielsweise den Winkel zwischen den optischen Achsen der Kamera und des SEPs umfassen. Gegebenenfalls kann ein weiterer Schritt des Verfahrens das Verwenden der zuvor bestimmten Ausrichtung der Kamera gegenüber dem SEP zur Erzeugung von Referenzdaten sein. Das SEP kann drehfest und/oder höhenverstellbar gegenüber der Kamera angeordnet sein. Andersherum kann die Kamera drehfest und/oder höhenverstellbar gegenüber dem SEP angeordnet sein.

Zur Erzeugung der Ausrichtungsdaten werden Referenzdaten und das zumindest eine erfasste Bild des Fahrzeugs verwendet. Das kann beispielsweise bedeuten, dass das erfasste Bild mit einem Referenzbild verglichen wird und daraus die Ausrichtungsdaten bestimmt werden. Dies kann ebenfalls bedeuteten, dass nur bestimmte Punkte, Teilbereiche oder Stellen des erfassten Bilds nur mit bestimmten Punkten, Teilbereichen oder Stellen eines Referenzbildes verglichen werden und aus einem Ergebnis des Vergleichs die Ausrichtungsdaten erzeugt werden.

In vorteilhaften Ausgestaltungen des Verfahrens umfasst das Unterstützen der Ausrichtung das Bestimmen der Ausrichtung des SEP bezüglich des Fahrzeugs und/oder Ausrichten des SEP bezüglich des Fahrzeugs. Das kann bedeuten, dass zumindest der Winkel zwischen einer SEP-Achse oder -Ebene und einer Fahrzeugachse oder -ebene als Ausrichtungsdaten bestimmt wird. Anschließend kann das SEP derart positioniert werden, dass ein bestimmter Winkel zwischen SEP-Achse oder -Ebene und einer Fahrzeugachse oder -ebene eingestellt ist. Ausrichten des SEPs kann in diesem Fall durch Drehen des SEPs derart, dass die Ausrichtung des SEP bezüglich des Fahrzeugs eine bestimmte Ausrichtung, in der beispielsweise ein bestimmter Winkel zwischen SEP und Fahrzeug eingestellt ist, aufweist. Ausrichten des SEPs kann beispielsweise auch das Berechnen eines Differenzwinkels zwischen der im Bestimmungsschritt bestimmten Ausrichtung und der bestimmungsgmäßen Ausrichtung und das anschließende Drehen des SEPs um den berechneten Winkel umfassen.

In weiteren vorteilhaften Ausführungsformen des Verfahrens wird das Bild und/oder die Referenzdaten und/oder die Ausrichtungsdaten an eine Anzeigevorrichtung übertragen. Die Übertragung kann dabei beispielsweise leitungsgebunden, wie über Kupferleitungen oder Glasfaser, oder kabellos, wie über WiFi oder Bluetooth, erfolgen. Besonders vorteilhafte Weiterbildungen dieser Ausführungsform des Verfahrens weisen die Schritte auf: Anzeigen des Bildes und/oder der Referenzdaten und/oder der Ausrichtungsdaten durch die Anzeigevorrichtung, und Ausrichten des SEP anhand des angezeigten Bildes und/oder der angezeigten Referenzdaten und/oder der angezeigten Ausrichtungsdaten. Ein Nutzer kann dabei beispielsweise die Ausrichtungsdaten nutzen, um das SEP auszurichten. Alternativ oder ergänzend ist es möglich, das erfasste Bild des Fahrzeugs und/oder die verwendeten Referenzdaten anzuzeigen. Ein Nutzer kann dadurch den Überblick über die verwendeten Daten erlangen, die zur Erzeugung der Ausrichtungsdaten verwendet werden.

In vorteilhaften Ausführungsformen des Verfahrens wird beim Erzeugen der Ausrichtungsdaten das erfasste Bild mit den Referenzdaten überlagert. Dadurch kann beispielsweise ein Nutzer, der die überlagerten Bilder betrachtet, Abweichungen von einer gewünschten Ausrichtung des SEP gegenüber dem Fahrzeug sehen bzw. erkennen und das SEP anhand dieser Daten ausrichten. Die Referenzdaten können vorzugsweise eine gerade Linie umfassen. Die Referenzdaten können somit als eine gerade Linie angezeigt werden. Die gerade Linie kann vorteilhafterweise eine Linie darstellen, die senkrecht oder parallel zur optischen Achse des SEPs ausgerichtet ist.

In besonders vorteilhaften Ausführungsformen werden beim Erfassen des Bildes des Fahrzeugs mittels der Kamera zumindest zwei vom SEP und/oder von einem Nutzer festgelegte Orientierungspunkte des Fahrzeugs erfasst und auf Bildpunkte des erfassten Bildes und/oder einen Kamerasensor der Kamera abgebildet. Zum Erzeugen der Ausrichtungsdaten können die abgebildeten Orientierungspunkte und die Referenzdaten verwendet werden. Als Orientierungspunkte können grundlegend beliebige Punkte oder Stellen am Fahrzeug verwendet werden, die von der Kamera erfassbar sind. Vorteilhafterweise sind die Orientierungspunkte charakteristische Stellen der Fahrzeugkarosserie, wie beispielsweise Anschraubpunkte oder sichtbare Schraubenköpfe. Besonders bevorzugt sind die Orientierungspunkte im Wesentlichen symmetrisch um eine Fahrzeugachse oder die Symmetrieebene des Fahrzeugs angeordnet. Auf diese Weise kann das SEP beispielsweise besonders einfach auf eine Symmetrieebene des Fahrzeugs ausgerichtet werden. Die Orientierungspunkte können in einem Teilbereich einer Oberseite des Fahrzeugs und/oder eines Motorraumes und/oder der Motorhaube und/oder der Karosserie des Fahrzeugs angeordnet sein. Die Orientierungspunkte können von einem Anwender durch visuelle Inspektion ad hoc bestimmt werden. Sie können auch für einen bestimmten Fahrzeugtyp vorher festgelegt sein.

Das erfasste Bild kann beispielsweise mit Referenzdaten überlagert werden. Dabei werden die Referenzdaten bevorzugt als Linie dargestellt. Vorteilhafterweise kann das erfasste Bild mit der überlagernden Linie auf einer Anzeigeeinheit angezeigt werden. Die Linie kann unabhängig von einem Ausrichtungswinkel der Kamera verzerrungsfrei mit den Kamerabildern überlagert werden. Beispielsweise kann die Linie so ausgestaltet sein, dass sie durch zwei Orientierungspunkte am Fahrzeug verläuft, wenn das SEP bestimmungsgemäß ausgerichtet ist. Wird die Linie mit dem erfassten Bild überlagert, liegen die Orientierungspunkte des Fahrzeugs genau dann unter der Linie, wenn das SEP die bestimmungsgemäße Ausrichtung aufweist. Das SEP kann in dieser Ausführungsform also solange gedreht oder geneigt werden, bis die Linie mit den Orientierungspunkte im erfassten Bild überlappt, sodass das SEP ausgerichtet ist. Das Ausrichten des SEP kann also beispielsweise durch Drehen und/oder Neigen des SEP derart, dass nach der Drehung und/oder Neigung des SEP vorbestimmte Bereiche des erfassten Bilds und vorbestimmte Bereiche der Referenzdaten miteinander überlappen.

In weiteren vorteilhaften Ausführungsformen des Verfahrens weisen die Referenzdaten eine Menge von vorbestimmten Pixeln der Kamera, insbesondere nebeneinander entlang einer Linie angeordneten Pixeln, oder eine Menge von vorbestimmten Bildpunkten im erfassten Bild, insbesondere nebeneinander entlang einer Linie angeordneten Bildpunkten auf. Dadurch kann, insbesondere wenn die Orientierung von SEP zu Kamera bekannt ist, die Ausrichtung des Fahrzeugs im erfassten Bild bezüglich des SEP bestimmt werden.

Vorteilhafterweise kann beispielsweise zunächst die Ausrichtung der Kamera bezüglich des SEP bestimmt werden und anschließend die Ausrichtung des Fahrzeugs bezüglich des SEP bestimmt werden.

Vorteilhafte Weiterbildungen des Verfahrens weisen die Schritte auf: Bestimmen eines Winkels zwischen einer Quer- oder Längsachse einer Karosserie des Fahrzeugs und einer Vorzugsachse des SEP auf Grundlage der erzeugten Ausrichtungsdaten und/oder Bestimmen eines Winkels einer geometrischen Fahrachse des Fahrzeugs und der Vorzugsachse des SEP auf Grundlage der erzeugten Ausrichtungsdaten. Bei der Vorzugsachse des SEP kann es sich dabei beispielsweise um die optische Achse des SEP handeln.

Vorteilhaften Weiterbildungen des Verfahrens weisen die Schritte auf: Bestimmen einer Drehrichtung des SEP unter Verwendung der Ausrichtungsdaten, wobei die Drehrichtung eine Richtung ist, in die das SEP um eine Vertikalachse drehbar ist, um eine Abweichung eines aus den erzeugten Ausrichtungsdaten bestimmten Winkels von einem zuvor festgelegten Winkel zu reduzieren und/oder um eine Abweichung der erzeugten Ausrichtungsdaten von zuvor festgelegten Ausrichtungsdatenwerten zu reduzieren. Der zuvor festgelegte Winkel, kann beispielsweise ein Winkel sein, der dem Winkel bei der bestimmungsgemäßen Ausrichtung entsprechen soll. Das Verfahren kann einen Nutzer also dabei unterstützen die Drehrichtung zu ermitteln, mit der das SEP in die bestimmungsgemäße Ausrichtung überführbar ist.

Weitere vorteilhafte Weiterbildungen des Verfahrens weisen die Schritte auf: Ausrichten des SEP in Bezug auf das Fahrzeug durch einen Aktor oder einen Nutzer, sodass eine Abweichung eines aus den erzeugten Ausrichtungsdaten bestimmten Winkels von einem zuvor festgelegten Winkel reduziert wird und/oder sodass eine Abweichung der erzeugten Ausrichtungsdaten von zuvor festgelegten Ausrichtungsdatenwerten reduziert wird. Damit kann das SEP beispielsweise automatisch in die bestimmungsgemäße Ausrichtung überführt werden.

Besonders vorteilhafte Weiterbildungen des Verfahrens weisen die Schritte auf: Beleuchten des SEP durch einen Scheinwerfer des Fahrzeugs zur Erfassung von SEP-Messdaten und vorzugsweise Verwenden der Ausrichtungsdaten durch das SEP zur Korrektur der SEP-Messdaten gemäß den gesendeten Ausrichtungsdaten. Die SEP Messdaten, also beispielsweise eine Intensitätsverteilung, die von einem Scheinwerfer generiert wird, können von der Ausrichtung des SEP gegenüber dem Scheinwerfer und folglich gegenüber dem Fahrzeug abhängen. Es können beispielsweise Verzerrungen der Lichtverteilung auftreten, wenn das SEP nicht ordnungsgemäß ausgerichtet ist. Diese SEP Messdaten können allerdings bei bekannter Ausrichtung des SEP gegenüber dem Fahrzeug entsprechend korrigiert werden.

In besonders vorteilhaften Weiterbildungen des Verfahrens ist das zumindest eine Bild des Fahrzeugs, das mittels der Kamera erfasst wird, eine Aufnahme eines Teilbereichs eines Motorraums des Fahrzeugs und/oder einer Motorhaube des Fahrzeuges und/oder einer Frontalansicht des Fahrzeuges ist. Der Motorraum oder Motorhaube des Fahrzeugs weist beispielsweise Elemente auf, die charakteristisch für eine Fahrzeug-Längsachse oder Fahrzeug-Querachse sein können. Beispielsweise symmetrisch angeordnet Anschraubpunkte oder sichtbare Schraubenköpfe.

In weiteren vorteilhaften Weiterbildungen kann beim Erzeugen der Ausrichtungsdaten ein Neigungswinkel der Kamera, der vorzugsweise mittels eines Inklinometers bestimmt wird, genutzt werden. Dadurch können beispielsweise die Referenzdaten gemäß dem Neigungswinkel entsprechend korrigiert werden. Zudem können Werte des Inklinometers dazu genutzt werden, die Ausrichtung der Kamera bezüglich des SEPs zu bestimmen.

Gemäß einem weiteren Aspekt wird außerdem ein System vorgeschlagen, aufweisend ein Scheinwerfer-Einstell-Prüfgerät, SEP, und eine Kamera, wobei das System ausgestaltet ist, das zuvor beschriebene Verfahren durchzuführen.

In vorteilhaften Weiterbildungen des Systems weist das SEP eine Lichterfassungseinheit zum Erfassen einer Lichtverteilung, die von einem Scheinwerfer des Fahrzeuges erzeugt wird, auf, wobei das Fahrzeug in einem Erfassungsbereich des SEP angeordnet ist. Unter der Lichtverteilung kann die Intensitätsverteilung, die vom Scheinwerfer erzeugt wird, verstanden werden.

In weiteren vorteilhaften Weiterbildungen des Systems ist die Kamera drehfest gegenüber dem SEP angeordnet ist und ausgestaltet, das Fahrzeug zumindest dann zu erfassen, wenn das SEP bestimmungsgemäß ausgerichtet ist. In diesem Fall ist die Orientierung des SEP bezüglich der Kamera zu jedem Zeitpunkt bekannt.

Vorteilhafterweise ist die Kamera derart ausgerichtet, dass sie einen Bereich erfassen kann, der vor dem SEP liegt, insbesondere einen Bereich von mindestens 0,5 m und/oder höchstens 2,0 m vor dem SEP liegt. Vorteilhafterweise ist die Kamera derart ausgerichtet, dass die Blickrichtung der Kamera mit der optischen Achse des SEP einen Winkel von mehr als 0° und weniger oder gleich als 90° einschließt. Vorteilhafterweise schließt die optische Achse der Kamera mit der optischen Achse des SEP einen Winkel von mehr als 0° weniger oder gleich als 90° ein. In manchen Ausführungsformen schließen die optische Achse der Kamera und die optische Achse des SEP einen Winkel von mehr als 30° und/oder weniger als 60° ein. In weiteren Ausführungsformen kann das SEP derart konfiguriert sein, dass die optische Achse des SEP waagerecht ausgerichtet ist. In besonders vorteilhaften Ausgestaltungen können die Kamera und das SEP derart angeordnet sein, dass ihre optischen Achsen in einer gemeinsamen Ebene angeordnet sind oder die Projektion der beiden optischen Achsen auf eine Ebene, vorteilhafterweise eine Bodenebene, zueinander parallel sind.

In vorteilhaften Weiterbildungen des Systems weist das System weiter einen Prozessor auf, der dazu eingerichtet ist, unter Verwendung von Referenzdaten und des erfassten Bildes des Fahrzeugs Ausrichtungsdaten zum Ausrichten des SEP bezüglich des Fahrzeugs und/oder zum Bestimmen der Ausrichtung des SEP bezüglich des Fahrzeugs zu erzeugen.

In vorteilhaften Weiterbildungen des Systems weist das System weiter eine Anzeigevorrichtung zum Darstellen des Bildes des Fahrzeuges und/oder der Referenzdaten und/oder der Ausrichtungsdaten auf. Die Anzeigevorrichtung kann beispielsweise einen Bildschirm oder ein Display aufweisen, und/oder ein Handy, ein Smartphone oder ein Tablet umfassen. In manchen Fällen kann die Anzeigevorrichtung auch lediglich ein lichtemittierendes Element aufweisen, beispielsweise eine Lampe oder eine LED. Dies kann beispielsweise in Ausführungsformen vorteilhaft sein, in denen die Ausrichtungsdaten einen kleinen Wertebereich, wie beispielsweise die zwei Werte "ausgerichtet" und "nicht ausgerichtet", aufweisen. Verschiedene Werte der Ausrichtungsdaten können im Allgemeinen auch dadurch dargestellt werden, dass die Anzeigevorrichtung für jeden Wert Licht einer bestimmten Farbe emittiert oder für zumindest einen Wert kein Licht emittiert. Als Anzeigevorrichtungen im Sinne der vorliegenden Offenbarung können auch akustische Signalgeber verstanden werden, die beispielsweise anhand der Tonfrequenz und/oder des zeitlichen Abstands zwischen aufeinanderfolgend erzeugter Töne und/oder anhand der Dauer aufeinanderfolgend erzeugter Töne.

In besonders vorteilhaften Weiterbildungen des Systems weist das System einen Aktor, welcher ausgestaltet ist, das SEP um eine Achse, bevorzugt eine vertikale Achse, zu drehen. Der Aktor kann beispielsweise auf Basis der Ausrichtungsdaten gesteuert werden.

Einzelne, mehrere oder sämtliche Merkmale des zuvor beschriebenen Systems können mit dem zuvor beschriebenen Verfahren kombiniert werden und andersherum.

Die Erfindung soll nachfolgend anhand von sechs Figuren erläutert werden.

Es zeigt
- Figur 1: eine perspektivische Ansicht eines Systems für die Ausrichtung eines SEP gemäß dem Stand der Technik.
- Figur 2: eine perspektivische Ansicht eines Systems für die Ausrichtung eines SEP gemäß einer Ausführungsform.
- Figur 3: eine schematische Darstellung eines Systems für die Ausrichtung eines SEP gemäß einer Ausführungsform in einer Seitenansicht und in einer Draufsicht.
- Figur 4: eine schematische Darstellung eines erfassten Bilds des Fahrzeugs.
- Figur 5: eine schematische Darstellung eines erfassten Bildes des Fahrzeugs mit einer überlagerten Linie als Referenzdaten.
- Figur 6: eine schematische Darstellung eines erfassten Bildes des Fahrzeugs mit einer überlagerten Linie als Referenzdaten.
- Figur 7: eine schematische Darstellung eines erfassten Bildes des Fahrzeugs mit einer überlagerten Linie als Referenzdaten.
- Figur 8: ein Blockdiagramm, das Verfahrensschritte gemäß einer Ausführungsform zeigt.

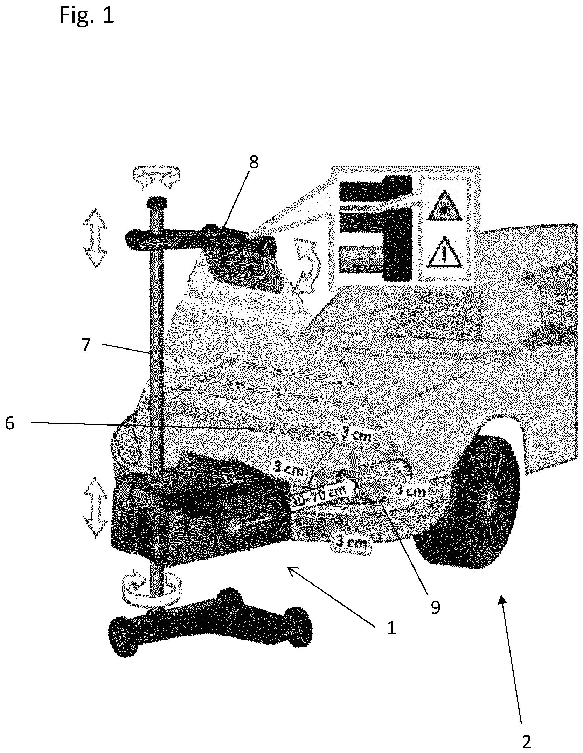

Figur 1 zeigt ein System für die Ausrichtung eines Scheinwerfer-Einstell-Prüfgeräts 1, SEP, gemäß dem Stand der Technik. Das Scheinwerfer-Einstell-Prüfgerät 1 kann beispielsweise eine Lichterfassungseinheit aufweisen, die an einer Stativanordnung 7 mit Rollen angeordnet ist. An der Stativanordnung 7 ist oberhalb des Scheinwerfer-Einstell-Prüfgeräts 1 ein Laser 8 wie ein Linienlaser angeordnet. Der Laser 8 ist drehfest gegenüber dem Scheinwerfer-Einstell-Prüfgerät 1 mit der Stativanordnung 7 verbunden. Der Laser 8 projiziert eine Lichtlinie 6 auf das Fahrzeug 2. Um das SEP 1 gegenüber dem Fahrzeug 2 auszurichten, wird der Laser 8 gemeinsam mit dem SEP 1 derart verschoben und gedreht, dass die projizierte Lichtlinie 6 zwei zuvor bestimmte Punkte an der Karosserie des Fahrzeugs 2 schneidet. Die Stativanordnung 7 kann also derart positioniert werden, dass die auf das Fahrzeug 2 projizierte Lichtlinie 6 auf bestimmte Punkte des Fahrzeugs 2 projiziert wird. Ein Nutzer, der ein SEP 1 mit dieser Vorrichtung gegenüber dem Fahrzeug 2 ausrichtet, betrachtet also die auf das Fahrzeug 2 projizierte Lichtlinie 6 und richtet das SEP 1 gemeinsam mit dem Laser 8 neu aus, bis die projizierte Linie 6 die bestimmten Punkte an der Karosserie des Fahrzeugs 2 schneidet.

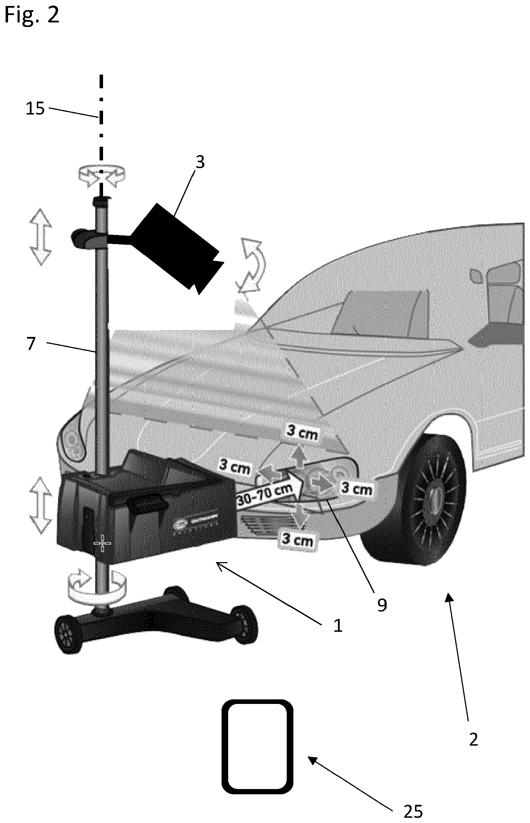

Figur 2 zeigt ein System 10, mit dem ein erfindungsgemäßes Verfahren zur Unterstützung bei der Ausrichtung eines SEPs 1 bezüglich eines Fahrzeugs 2 mit Hilfe einer Kamera 3 durchführbar ist.

Das System 10 weist ein SEP 1 und eine Kamera 3 auf. Die Kamera 3 ist dazu eingerichtet, zumindest in der bestimmungsgemäßen Ausrichtung des SEP 1 ein Bild 20 des Fahrzeuges 2 zu erfassen. Das SEP 1 ist dazu eingerichtet, die Lichtverteilung eines Scheinwerfers 9 des Fahrzeuges 2 zu erfassen. In der dargestellten Ausführungsform sind das SEP 1 und die Kamera 3 gemeinsam an einer Stativanordnung 7 verbunden. In der in Figur 2 dargestellten Ausführungsform des Systems 10 sind das SEP 1 und die Kamera 3 durch die Stativanordnung 7 drehfest miteinander verbunden, sodass die Ausrichtung des SEP 1 gegenüber der Kamera 3 unveränderlich und bekannt ist. SEP 1 und Kamera 3 sind gemeinsam um eine Drehachse 15 drehbar. Es sind auch Ausführungsformen des Systems 10 möglich, in denen die Ausrichtung des SEP 1 gegenüber der Kamera 3 veränderlich ist und über geeignete Mittel bestimmbar ist.

Die Blickrichtung der Kamera 3 und eine optische Achse des SEP 1 schließen einen Winkel ein, der größer als 0° ist. Das bedeutet, dass die Blickrichtung der Kamera 3 und die optische Achse des SEPs 1 nicht parallel zueinander sind. Die Blickrichtung 12 der Kamera kann beispielsweise die optische Achse des ersten objektseitigen optischen Elements der Kamera 3 sein.

Die Kamera 3 und das SEP 1 sind gemeinsam um eine Drehachse 15 drehbar, die durch die Stativanordnung 7 festgelegt ist. Das System 10 erzeugt Ausrichtungsdaten 4 unter Verwendung des erfassten Bildes 20 des Fahrzeugs 2 und von Referenzdaten 5. Das System 10 kann dazu beispielsweise einen Prozessor aufweisen, der dazu eingerichtet ist, Ausrichtungsdaten 4 zum Unterstützen der Ausrichtung des SEP 1 bezüglich des Fahrzeugs 2 unter Verwendung von Referenzdaten 5 und des zumindest einen erfassten Bildes 20 des Fahrzeugs 2 zu erzeugen. Aus den Ausrichtungsdaten 5 kann vorteilhafterweise die Ausrichtung des SEP 1 bezüglich des Fahrzeugs 2 bestimmt werden. Anhand der Ausrichtungsdaten 5 kann das SEP 1 zusätzlich oder alternativ auch gegenüber dem Fahrzeug 2 ausgerichtet werden.

Das System 10 kann zudem in manchen Ausführungsformen eine Anzeigevorrichtung 25 aufweisen. Dabei können die erfassten Bilder 20 und/oder die Referenzdaten 5 und/oder die Ausrichtungsdaten 4 an die Anzeigevorrichtung 25 übertragen werden und von der Anzeigevorrichtung 25 angezeigt werden. In der Ausführungsform der Figur 2 erfolgt die Übertragung kabellos, wobei zumindest das System 10 einen Sender und die Anzeigevorrichtung 25 einen Empfänger aufweist. Es sind aber auch Systeme 10 möglich, in denen die Daten mittels Kabel oder anderen Leitungen übertragen werden. Die Anzeigevorrichtung 25 kann dazu ausgebildet sein, die erfassten Bilder 20 und/oder die Referenzdaten 5 und/oder die Ausrichtungsdaten 4 zu empfangen und vorteilhafterweise auch anzuzeigen. Ein Nutzer kann dann das SEP anhand der angezeigten erfassten Bilder 20 und/oder der angezeigten Referenzdaten 5 und/oder der angezeigten Ausrichtungsdaten 4 ausrichten.

Das SEP 1 kann beim Ausrichten beispielsweise in eine Position gebracht werden, in der es die vom Scheinwerfer erzeugte Lichtverteilung erfassen kann. Dazu kann das SEP 1 in horizontaler und vertikaler Richtung vor dem Scheinwerfer positioniert werden. In manchen Fällen kann das SEP 1 vor dem eigentlichen Ausrichten auf das Fahrzeug 2 derart ausgerichtet werden, dass die optische Achse 11 des SEP 1 horizontal, also waagrecht verläuft. Vorteilhafterweise kann die horizontale Ausrichtung der optischen Achse 11 des SEP 1 auch im weiteren Verlauf des Verfahrens beibehalten werden, wenn beispielsweise eine Ebene des SEPs 1, die in vertikaler Richtung ausgerichtet ist und durch die optische Achse 11 des SEP 1 verläuft, auf das Fahrzeug 2 ausgerichtet wird. Das SEP 1 kann beim Ausrichten auf das Fahrzeug 2 beispielsweise derart positioniert werden, dass die optische Achse des SEP 1 parallel zu einer Symmetrieebene des Fahrzeugs 2 ist. Das SEP 1 kann beim Ausrichten beispielsweise auch derart positioniert werden, dass die optische Achse des SEP 1 mit einer Symmetrieebene des Fahrzeugs 2 einen Winkel einschließt, dessen Winkelmaß beispielsweise 2 Grad beträgt. Ausrichten bedeutet in diesem Zusammenhang, dass das SEP 1 derart in Bezug auf das Fahrzeug 2 positioniert wird, dass zumindest eine bestimmte Achse oder eine bestimmte Ebene des SEP 1 und eine bestimmte Achse oder eine bestimmte Ebene des Fahrzeugs 2 einen Winkel mit einem bestimmten Winkelmaß einschließen oder parallel zueinander angeordnet sind. Vorteilhafterweise, kann die Ausrichtung des SEP 1 auch umfassen, dass das SEP 1 derart in Bezug auf das Fahrzeug 2 positioniert wird, dass der Abstand zwischen SEP 1 und Fahrzeug 2 ein bestimmtes Längenmaß aufweist.

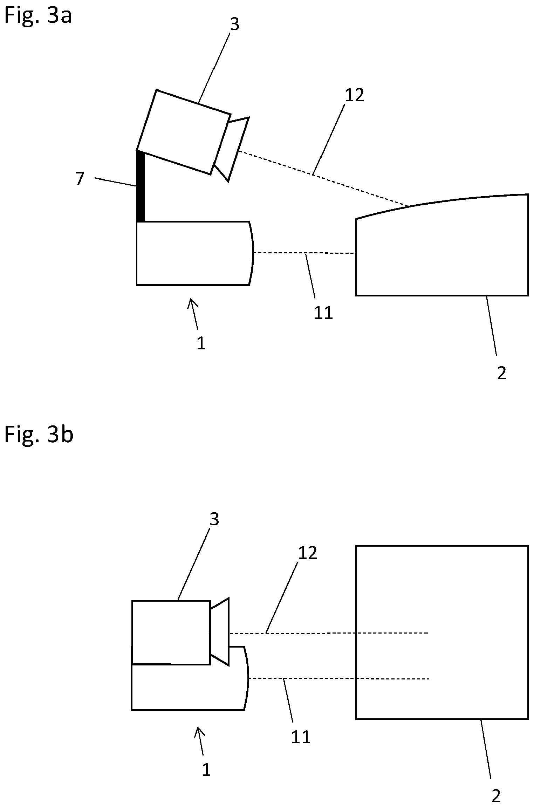

Die Figuren 3a und 3b zeigen eine schematische Darstellung eines Systems 10 in einer Seitenansicht, bzw. in einer Draufsicht. Die Seitenansicht der Figur 3a zeigt eine Normalprojektion auf eine vertikale Ebene, die durch die optische Achse 11 des SEP 1 verläuft. In der Seitenansicht der Figur 3a wird sichtbar, dass das SEP 1 und die Kamera 3 durch die Stativanordnung 7 miteinander verbunden sind. Die Kamera 3 ist dabei über dem SEP 1 angeordnet. Das SEP 1 ist in dieser Ausführungsform derart angeordnet, dass die optische Achse 11 des SEP 1 in horizontaler Richtung verläuft. Die Blickrichtung bzw. die optische Achse 12 der Kamera 3 schließt mit der optischen Achse 11 des SEP 1 einen Winkel ein der größer als 0° und kleiner als 90° ist. Insbesondere schließen die optische Achse 11 des SEP 1 und die Projektion der optischen Achse 12 der Kamera 3 auf eine vertikale Ebene, die durch die optische Achse 11 des SEP 1 verläuft, einen Winkel von mehr als 0° und weniger als oder gleich 90° ein.

Die Draufsicht der Figur 3b zeigt eine Normalprojektion auf eine nicht dargestellte horizontale Ebene. Die horizontale Ebene kann beispielsweise eine Bodenebene sein, die durch den Boden eines Versuchsstands gebildet wird. Die Kamera 3 ist dabei versetzt zum SEP 1 angeordnet. Es ist auch Ausführungsformen möglich, in denen die Kamera 3 und das SEP 1 übereinander angeordnet sind. In der in Figur 3b dargestellten Ausführungsform sind Kamera 3 und SEP 1 so angeordnet, dass die Projektionen der optischen Achse 12 der Kamera 3 und der optischen Achse 11 des SEP 1 auf die Bodenebene zueinander parallel sind. Es sind jedoch auch Ausführungsformen möglich, in denen die oben beschriebenen Projektionen der optischen Achsen 11, 12 auf die Bodenebene einen Winkel einschließen, der kleiner als 90° ist.

Die Kamera 3 ist in dieser Ausführungsform derart angeordnet und gegenüber dem SEP 1 derart ausgerichtet, dass sie eine Oberseite, und/oder einen Motorraum und/oder eine Motorhaube und/oder die Karosserie eines Fahrzeugs 2, das vor dem SEP 1 positioniert ist, erfassen kann. Vorteilhafterweise ist die Kamera dazu eingerichtet einen bis zu 3 m, oder bis zu 4 m breiten Bereich, dessen Zentrum in einem Abstand zwischen 1 m und 3m vor dem SEP angeordnet ist, zu erfassen.

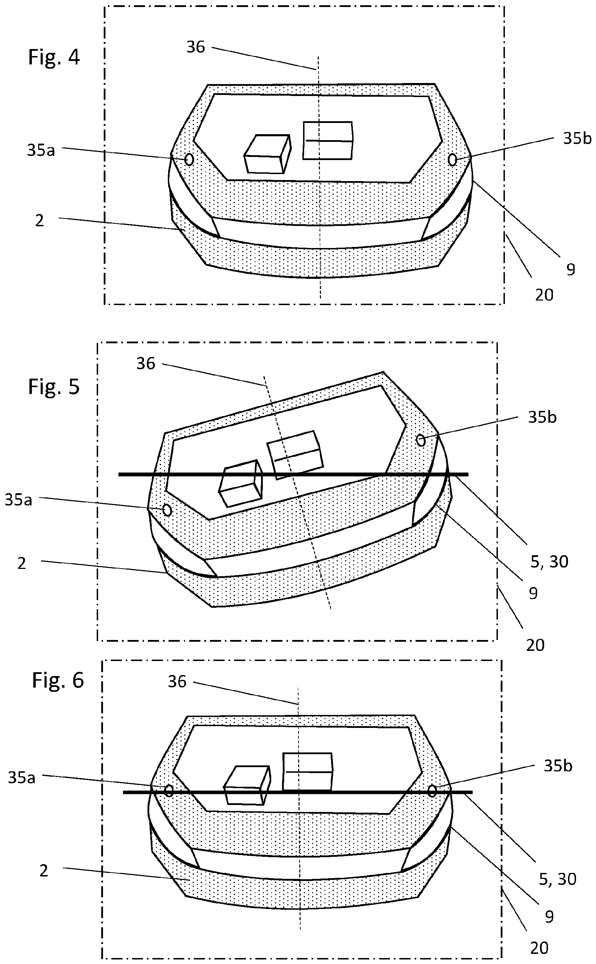

Figur 4 zeigt ein erfasstes Bild 20 des Fahrzeugs 2. Das erfasste Bild 20 in dieser Ausführungsform zeigt das Fahrzeug 2 mit geöffneter Motorhaube von oben, also im Wesentlichen den Motorraum des Fahrzeugs 2. Beim Erfassen des Bildes können in manchen ausführungsformen zumindest zwei Orientierungspunkte 35a, 35b des Fahrzeugs 2 erfasst werden. Die Orientierungspunkte können dabei vom SEP 1 oder von einem Nutzer festgelegt werden. Die Orientierungspunkte 35a, 35b werden als Bereiche oder Bildpunkte des erfassten Bildes 20 angezeigt bzw. auf einen Kamerasensor der Kamera abgebildet. In besonders vorteilhaften Ausführungsformen können mindestens oder lediglich die beiden Orientierungspunkte 35a, 35b gemeinsam mit den Referenzdaten 5 verwendet werden, um die Ausrichtungsdaten 4 zu erzeugen.

Orientierungspunkte 35a, 35b können beispielsweise charakteristische Stellen der Karosserie des Fahrzeugs 2 sein oder umfassen. Beispielsweise Schraubenköpfe, die auf beiden Seiten der Karosserie angeordnet sind, oder charakteristische Formen, wie beispielsweise Ecken oder Kanten der Karosserie, die auf beiden Seiten der Karosserie angeordnet sind. Vorteilhafterweise sind die Orientierungspunkte 35a, 35b charakteristische Merkmale der Karosserie, die symmetrische um eine Symmetrieebene des Fahrzeugs 2 angeordnet sind. Werden die Referenzdaten 5 beispielsweise als gerade Linie 35 dargestellt, kann die Ausrichtung derart erfolgen, dass die gerade Linie 35 und die Orientierungspunkte übereinander liegen. Dabei können entweder die Referenzdaten 5 so festgelegt werden, dass bei erfolgter Ausrichtung des SEP gerade Linie 30 und die Orientierungspunkte 35a, 35b übereinander liegen. Es können aber auch die Orientierungspunkte 35a, 35b so festgelegt werden, dass bei erfolgter Ausrichtung des SEP 1 die gerade Linie 30 und die Orientierungspunkte 35a, 35b übereinander liegen.

In den Figuren 5 und 6 sind jeweils erfasste Bilder 20 des Fahrzeugs 2 dargestellt. Außerdem zeigen beide Figuren jeweils die Referenzdaten 5 als eine gerade Linie 35. Die Figuren 4 und 5 zeigen eine Darstellung, in der das erfasste Bild 20 mit den Referenzdaten 5 überlagert ist. In den Figuren 4 und 5 ist die gerade Linie 30, die die Referenzdaten 5 darstellt, als eine waagerechte Linie dargestellt. Dies kann beispielsweise dann sinnvoll sein, wenn die Kamera waagerecht ausgerichtet ist und wenn die optische Achse der Kamera 3 und die optische Achse des SEP in einer gemeinsamen Ebene angeordnet sind oder Projektionen der optischen Achse der Kamera 3 und der optischen Achse des SEP 1 auf den Boden zueinander parallel sind. Die gerade Linie 30 kann in diesem Fall eine Linie darstellen, die senkrecht zur optischen Achse des SEP 1 ausgerichtet ist.

Wird das erfasste Bild 20 beispielsweise von einer Kamera 3 erfasst, die einen Kamerasensor mit Pixeln aufweist, kann die gerade Linie 35 eine Menge von nebeneinander angeordneten Pixeln des Kamerasensors sein. Die gerade Linie 35 kann dann beispielsweise durch die Pixel eines Kamerasensors dargestellt werden, die in einer Zeile des Kamerasensors angeordnet sind.

In den Figuren 5 und 6 gilt das SEP als bestimmungsgemäß ausgerichtet, wenn die Orientierungspunkte 35a, 35b des Fahrzeugs auf die gerade Linie 35 abgebildet werden. Wenn die gerade Linie 30 durch eine Menge von Pixeln eines Kamerasensors der Kamera 3 dargestellt wird, dann kann das SEP 1 als ausgerichtet angesehen werden, wenn die Orientierungspunkte 35a, 35b beide jeweils auf zumindest einen jener Pixel des Kamerasensors der Kamera 3 abgebildet werden. Die Referenzdaten 5 können allerdings auch eine beliebige Menge vorbestimmter Bildpunkte des Kamerasensors aufweisen.

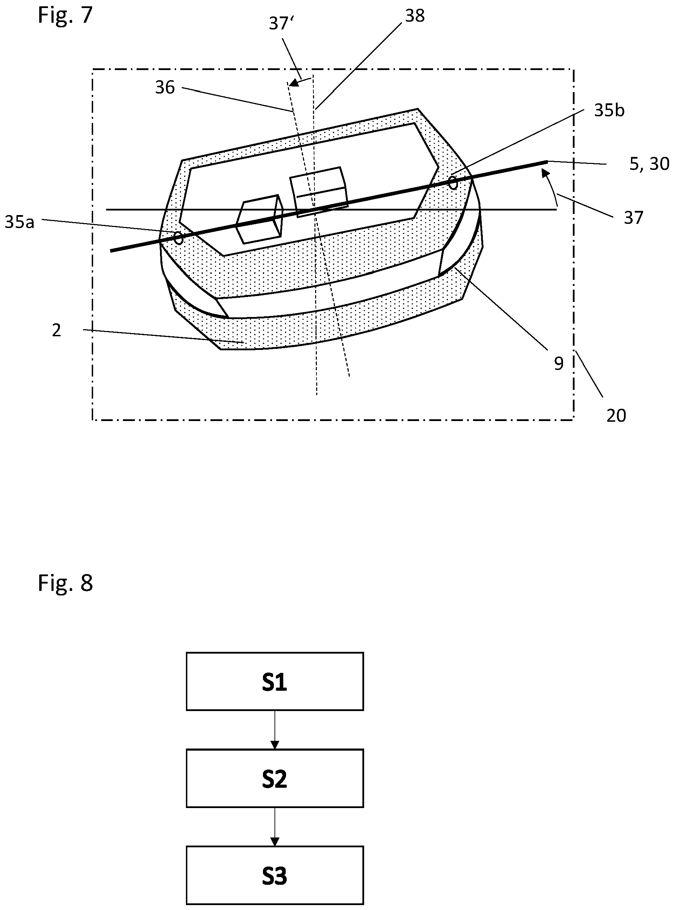

Figur 7 zeigt eine vorteilhafte Ausgestaltung der Erfindung, in der die gerade Linie 30 auch um einen bestimmten Winkel 37 gegenüber einer waagrechten geraden Linie, wie sie in den Figuren 5 und 6 gezeigt ist, 35 verkippt ist. Das SEP 1 kann dabei wie im Ausführungsbeispiel der Figuren 5 und 6 gegenüber dem Fahrzeug 2 ausgerichtet werden, also durch gemeinsames Kippen, Verschieben und/oder Rotieren der Kamera 3 und des SEP 1 um eine Drehachse 15, sodass die Orientierungspunkte 35a, 35b auf die Linie 30 abgebildet werden. In manchen Ausführungsformen kann auch vorgesehen sein, dass die Linie 30 verschiebbar ist. Die Linien kann im angezeigten Bild nach oben und unten oder nach links und rechts bewegt werden, ohne dass Winkel zum SEP 1 geändert wird. Durch den voreingestellten Winkel der 37 ist in diesem Fall auch die Ausrichtung um das gleiche Winkelmaß 37 verkippt. Dies kann beispielsweise genutzt werden, um das SEP 1 unter einem beliebigen Winkel 37 gegenüber dem Fahrzeug 2 auszurichten.

In vorteilhaften Ausführungsformen kann das SEP 1 bezüglich der geometrischen Fahrachse 38 des Fahrzeugs 2 ausgerichtet werden, anstatt bezüglich der Symmetrieachse 36 oder -ebene der Karosserie des Fahrzeugs 2. Die geometrische Fahrachse 38 kann in einem gesonderten Schritt gemessen werden und die Winkelabweichung 37' der geometrischen Fahrachse 38 zur Symmetrieachse 36 oder -ebene des Fahrzeugs 2 bestimmt werden. Die Messung der geometrischen Fahrachse 38 kann im Rahmen einer Achsvermessung oder mittels eines Werkzeugs zur Kalibrierung von Fahrzeugkameras/-sensoren erfolgen. Anschließend kann die gerade Linie 35 um die Winkelabweichung 37' zwischen geometrischer Fahrachse 38 und Symmetrieachse 36 /-ebene verkippt oder verdreht werden. In einem nächsten Schritt können Orientierungspunkte 35a, 35b gewählt werden, die symmetrisch um die Symmetrieachse 36 oder -ebene der Karosserie des Fahrzeugs 2 angeordnet sind. Wird die Kamera 3 gemeinsam mit dem SEP 1 derart positioniert, dass diese Orientierungspunkte 35a, 35b auf die verkippte gerade Linie 30 abgebildet werden, so ist das SEP 1 bezüglich der geometrischen Fahrachse 38 des Fahrzeug 2 ausgerichtet.

Für den oben beschriebenen Fall, in dem die Kamera 3 waagerecht ausgerichtet ist und die optische Achse der Kamera 3 sowie die optische Achse des SEP 1 in einer gemeinsamen Ebene angeordnet sind oder Projektionen der optischen Achse der Kamera 3 und der optischen Achse des SEP 1 auf den Boden zueinander parallel sind, ist die optische Achse des SEP 1 nach Durchführung der zuvor beschriebenen Schritte parallel zur geometrischen Fahrachse ausgerichtet. In Fällen, in denen die Kamera 3 nicht waagerecht angeordnet ist, kann der Neigungswinkel der Kamera 3 beispielsweise mit einem Inklinometer bestimmt werden und die Referenzdaten 5 entsprechend dem Neigungswinkel der Kamera 3 angepasst werden.

Es sind auch Ausführungsformen möglich, in denen die Orientierungspunkte derart ausgewählt oder vorbestimmt werden können, dass sie der Winkelabweichung 37' zwischen geometrische Fahrachse 38 und Symmetrieachse 36 des Fahrzeugs 2 Rechnung tragen und die Linie 35 nicht verkippt wird.

In weiteren Ausführungsformen kann ein Winkel zwischen einer Vorzugsachse des Fahrzeugs 2 und einer Vorzugsachse des SEP 1, insbesondere der optischen Achse des SEP 1, auf Grundlage der erzeugten Ausrichtungsdaten 4 bestimmt werden.

Figur 8 zeigt ein Blockbild, das verschiedene Schritte des Verfahrens zur Unterstützung bei der Ausrichtung des SEP 1 bezüglich des Fahrzeugs 2 mit Hilfe der Kamera 3 darstellt. Dabei stellt Schritt S1 das Erfassen eines Bildes zumindest eines Teilbereichs des Fahrzeugs 2 mit der Kamera 3 dar. Schritt S2 stellt den Schritt des Erzeugens der Ausrichtungsdaten 4 aus dem erfassten Bild und den Referenzdaten 5 dar. Im Schritt S3 kann das SEP unter Verwendung der Ausrichtungsdaten 4 ausgerichtet werden. Das Verfahren der Fig. 8 kann mit den zuvor im Zusammenhang der Figuren 1-7 beschriebenen Schritten kombiniert und um einzelne, mehrere oder sämtliche dieser Schritte ergänzt werden.

### Bezugszeichenliste

- 1: Scheinwerfer-Einstell-Prüfgerät, SEP
- 2: Fahrzeug
- 3: Kamera
- 4: Ausrichtungsdaten
- 5: Referenzdaten
- 6: projizierte Lichtlinie
- 7: Stativanordnung
- 8: Laser
- 9: Scheinwerfer
- 10: System
- 11: optische Achse des SEP
- 12: Blickrichtung/optische Achse der Kamera
- 15: Drehachse
- 20: erfasstes Bild
- 25: Anzeigevorrichtung
- 30: Linie
- 35a: Orientierungspunkt
- 35b: Orientierungspunkt
- 36: Achse/Ebene des Fahrzeugs
- 37: Winkel
- 37': Winkel
- 38: geometrische Fahrachse
- S1: Erfassen zumindest eines Bildes des Fahrzeugs mittels der Kamera
- S2: Erzeugen von Ausrichtungsdaten
- S3: Ausrichten des SEP

## Patentansprüche

1. Verfahren zumindest zur Unterstützung bei der Ausrichtung eines Scheinwerfer-Einstell-Prüfgeräts, SEP, bezüglich eines Fahrzeugs mit Hilfe einer Kamera, aufweisend die Schritte:
• Erfassen zumindest eines Bildes des Fahrzeugs mittels der Kamera,
• Erzeugen von Ausrichtungsdaten zum Unterstützen der Ausrichtung des SEP bezüglich des Fahrzeugs unter Verwendung von Referenzdaten und des zumindest einen erfassten Bildes des Fahrzeugs.

2. Verfahren nach dem vorangehenden Anspruch, wobei das Unterstützen der Ausrichtung folgendes umfasst: Bestimmen der Ausrichtung des SEP bezüglich des Fahrzeugs und/oder Ausrichten des SEP bezüglich des Fahrzeugs.

3. Verfahren nach einem der vorangehenden Ansprüche, weiter aufweisend den Schritt: Übertragen des Bildes und/oder der Referenzdaten und/oder der Ausrichtungsdaten an eine Anzeigevorrichtung.

4. Verfahren nach dem vorangehenden Anspruch, weiter aufweisend die Schritte: Anzeigen des Bildes und/oder der Referenzdaten und/oder der Ausrichtungsdaten durch die Anzeigevorrichtung, und Ausrichten des SEP anhand des angezeigten Bildes und/oder der angezeigten Referenzdaten und/oder der angezeigten Ausrichtungsdaten.

5. Verfahren nach einem der vorstehenden Ansprüche, wobei beim Erzeugen der Ausrichtungsdaten das erfasste Bild mit den Referenzdaten überlagert wird, wobei die Referenzdaten vorzugsweise eine gerade Linie umfassen.

6. Verfahren nach einem der vorangehenden Ansprüche, wobei
beim Erfassen des Bildes des Fahrzeugs mittels der Kamera zumindest zwei vom SEP und/oder von einem Anwender festgelegte Orientierungspunkte des Fahrzeugs erfasst werden und auf Bildpunkte des erfassten Bildes und/oder einen Kamerasensor der Kamera abgebildet werden, wobei zum Erzeugen der Ausrichtungsdaten die abgebildeten Orientierungspunkte mit den Referenzdaten verwendet werden.

7. Verfahren nach einem der vorangehenden Ansprüche, wobei
die Referenzdaten eine Menge von vorbestimmten Pixeln der Kamera, insbesondere nebeneinander entlang einer Linie angeordneten Pixeln, oder eine Menge von vorbestimmten Bildpunkten im erfassten Bild, insbesondere nebeneinander entlang einer Linie angeordneten Bildpunkten, aufweisen.

8. Verfahren nach einem der vorangehenden Ansprüche, weiter aufweisend den folgenden Schritt: Bestimmen eines Winkels zwischen einer Quer- oder Längsachse einer Karosserie des Fahrzeugs und einer Vorzugsachse des SEP auf Grundlage der erzeugten Ausrichtungsdaten und/oder Bestimmen eines Winkels einer geometrischen Fahrachse des Fahrzeugs und der Vorzugsachse des SEP auf Grundlage der erzeugten Ausrichtungsdaten.

9. Verfahren nach einem der vorangehenden Ansprüche, weiter aufweisend den folgenden Schritt: Bestimmen einer Drehrichtung des SEP unter Verwendung der Ausrichtungsdaten, wobei die Drehrichtung eine Richtung ist, in die das SEP um eine Vertikalachse drehbar ist, um eine Abweichung eines gemäß Anspruch 8 aus den erzeugten Ausrichtungsdaten bestimmten Winkels von einem zuvor festgelegten Winkel zu reduzieren und/oder um eine Abweichung der erzeugten Ausrichtungsdaten von zuvor festgelegten Ausrichtungsdatenwerten zu reduzieren.

10. Verfahren nach einem der vorangehenden Ansprüche, weiter den folgenden Schritt aufweist:
Ausrichten des SEP in Bezug auf das Fahrzeug durch einen Aktor oder einen Nutzer, sodass eine Abweichung eines gemäß Anspruch 8 aus den erzeugten Ausrichtungsdaten bestimmten Winkels von einem zuvor festgelegten Winkel reduziert wird und/oder sodass eine Abweichung der erzeugten Ausrichtungsdaten von zuvor festgelegten Ausrichtungsdatenwerten reduziert wird.

11. Verfahren nach einem der vorangehenden Ansprüche, weiter aufweisend die folgenden Schritte:
Beleuchten des SEP durch einen Scheinwerfer des Fahrzeugs zur Erfassung von SEP-Messdaten und vorzugsweise
Verwenden der Ausrichtungsdaten durch das SEP zur Korrektur der SEP-Messdaten gemäß den gesendeten Ausrichtungsdaten.

12. Verfahren nach einem der vorangehenden Ansprüche, wobei das zumindest eine Bild des Fahrzeugs, das mittels der Kamera erfasst wird, eine Aufnahme eines Motorraums des Fahrzeugs und/oder einer Frontalansicht des Fahrzeuges ist, und/oder wobei beim Erzeugen der Ausrichtungsdaten ein Neigungswinkel der Kamera, der vorzugsweise mit einem Inklinometers bestimmt wird, genutzt wird.

13. System, umfassend ein Scheinwerfer-Einstell-Prüfgerät, SEP, und eine Kamera, wobei das System ausgestaltet ist, das Verfahren gemäß einem der vorstehenden Ansprüche durchzuführen.

14. System nach Anspruch 13, wobei
das SEP eine Lichterfassungseinheit zum Erfassen einer Lichtverteilung, die von einem Scheinwerfer des Fahrzeuges erzeugt wird, aufweist, wobei das Fahrzeug in einem Erfassungsbereich des SEP angeordnet ist, und
die Kamera drehfest gegenüber dem SEP angeordnet ist und ausgestaltet ist, das Fahrzeug zu erfassen,
das System weiter aufweisend einen Prozessor, der dazu eingerichtet ist, Ausrichtungsdaten zum Ausrichten des SEP bezüglich des Fahrzeugs und/oder zum Bestimmen der Ausrichtung des SEP bezüglich des Fahrzeugs unter Verwendung von Referenzdaten und des erfassten Bildes des Fahrzeugs zu erzeugen.

15. System nach einem der Ansprüche 13 oder 14, weiter aufweisend einen Aktor, welcher ausgestaltet ist, das SEP um eine Vertikalachse zu drehen und/oder weiter aufweisend eine Anzeigevorrichtung zum Darstellen des Bildes des Fahrzeuges und/oder der Referenzdaten und/oder der Ausrichtungsdaten.
